# FASCICULE DE BREVET EUROPEEN

(11) **EP 3 455 483 B1**
(45) Date de publication et mention de la délivrance du brevet: **18.03.2020**
(21) Numéro de dépôt: 17727662.3
(22) Date de dépôt: 12.05.2017
(51) Int. Cl.: F02K 1/12, F02K 1/15

(54) **RIGIDIFICATION DE LA LIAISON ENTRE VOLETS DANS UNE TUYÈRE A SECTION VARIABLE.**
VERSTEIFUNG EINER VERBINDUNG ZWISCHEN KLAPPEN IN EINER DÜSE MIT VARIABLEM QUERSCHNITT
STIFFENING OF THE CONNECTION BETWEEN FLAPS IN A NOZZLE OF VARIABLE CROSS SECTION

(30) Priorité: 12.05.2016 FR 1654251
(43) Date de publication de la demande: 20.03.2019
(73) Titulaire: Safran Ceramics, 33185 Le Haillan (FR); Safran Aircraft Engines, 75015 Paris (FR)
(72) Inventeur: LEPRETRE, Gilles, 33185 Le Haillan (FR); TRAN, Julien, F-33290 Blanquefort (FR)
(74) Mandataire: Cabinet Beau de Loménie
(86) Numéro de dépôt international: PCT/FR2017/051158
(87) Numéro de publication internationale: WO 2017/194897

(56) Documents cités:
- FR-A1- 2 732 408
- GB-A- 750 307
- US-A- 2 926 489

## Description

### Arrière-plan de l'invention

L'invention concerne les moteurs aéronautiques équipés de tuyère à section variable et, plus particulièrement, la liaison permettant de transmettre à chaque volet un mouvement d'actionnement.

Les documents US 7 533 533 et US 2 926 489 décrivent une tuyère à section variable qui comprend une pluralité de volets internes ou volets chauds canalisant le flux d'air primaire ou principal du moteur. Les volets internes sont actionnés par des leviers de commande de façon à modifier le profil du flux primaire du moteur de la turbomachine (i.e. la ou les sections d'éjection selon qu'il s'agit d'un simple convergent ou d'une tuyère convergente/divergente).

Dans le document US 7 533 533, seul un volet interne sur deux est commandé directement par un vérin qui est relié au levier de commande du volet. Le volet adjacent au volet équipé d'un vérin est asservi à ce dernier par des chapes de liaison qui transmettent au volet asservi une partie de l'effort produit par le vérin.

Si cette solution permet d'alléger la tuyère à section variable par la minimisation du nombre de vérins dans la tuyère, elle entraîne une dissymétrie dans le chargement mécanique de la tuyère. Les niveaux des efforts mécaniques ainsi que les directions de ces efforts au niveau des parties des leviers de commande des volets fixés sur le carter d'éjection de la tuyère sont différents selon que ces leviers sont équipés ou non d'un vérin. La commande des leviers sans vérin est moins rigide que celle des levier avec vérins, ce qui conduit à un décalage de position angulaire sur les volets asservis. A cet effet, il est nécessaire d'effectuer un pré-braquage sur les volets asservis pour compenser ce décalage.

Ce déséquilibre mécanique entraîne un hyperstatisme important dans la tuyère, une cinématique chargée en tangentiel et une usure importante des pièces en mouvement dans les dispositifs de commande des leviers.

Par conséquent, il existe un besoin pour permettre une transmission équilibrée et synchronisée des efforts mécaniques à chaque volet de la tuyère sans augmenter significativement la masse globale de la tuyère.

### Objet et résumé de l'invention

A cet effet, l'invention propose une tuyère à section variable comprenant un carter d'éjection et une pluralité de volets internes disposés en couronne en aval du carter d'éjection, chaque volet interne étant relié au carter d'éjection par un levier mobile monté de manière pivotante à l'extrémité aval du carter d'éjection, chaque levier étant mobile entre une première position dans laquelle les volets sont en position haute et une deuxième position dans laquelle les volets sont en position braquée, la tuyère comprenant en outre une pluralité de pièces rigides de transmission de mouvement réparties de manière circonférentielle autour du carter d'éjection, chaque pièce rigide de transmission de mouvement étant reliée respectivement à deux leviers adjacents par une première et une deuxième bielles, chaque pièce rigide de transmission de mouvement étant en outre reliée à un vérin de commande, chaque pièce rigide de transmission de mouvement étant apte à se déplacer dans une direction correspondant à la direction axiale de la tuyère sous l'action du vérin de commande auquel il est relié de manière à déplacer les leviers adjacents entre les première et deuxième positions, caractérisée en ce que chaque pièce rigide de transmission de mouvement est reliée à un chariot de guidage monté coulissant dans une glissière, chaque glissière étant fixée sur le carter d'éjection en amont des leviers suivant une direction correspondant à la direction axiale de la tuyère, chaque glissière étant alignée axialement avec un vérin de commande, ou en ce que chaque pièce rigide de transmission de mouvement est reliée à deux chariots de guidage chacun montés coulissant dans une glissière, chaque glissière étant fixée sur le carter d'éjection en amont de chaque levier suivant une direction correspondant à la direction axiale de la tuyère, les glissières étant décalées dans le sens circonférentiel par rapport à chaque vérin de commande.

Grâce à la pièce rigide de transmission de mouvement, il est possible de rigidifier la liaison entre deux leviers adjacents et de transmettre de manière équilibrée et synchronisée à ces deux leviers un effort de déplacement à partir d'un même vérin. On améliore ainsi l'équilibre des efforts transmis aux volets ainsi que la reprises des efforts auxquels peuvent être soumis les volets sans augmenter le nombre de vérins, ce qui permet de conserver une masse globale de la tuyère satisfaisante.

En outre, les pièces rigides de transmission de mouvement étant indépendantes mécaniquement les unes des autres, l'ensemble du dispositif de commande des volets présente une bonne souplesse qui est avantageuse notamment lors des dilatations thermiques dans la tuyère.

Selon une caractéristique particulière, chaque pièce rigide de transmission de mouvement est reliée aux première et deuxième bielles respectivement par une première et deuxième liaisons articulées.

Selon une autre caractéristique particulière, la première liaison articulée comprend une première noix d'articulation logée dans un évidement présent à une première extrémité de la pièce rigide de transmission de mouvement, une première chape reliant la première noix d'articulation à la première bielle, un jeu circonférentiel étant présent entre la première noix d'articulation et le bord externe de l'évidement dans la direction circonférentielle de la tuyère. La deuxième liaison articulée comprend une deuxième noix d'articulation logée dans un évidement présent à une deuxième extrémité de la pièce rigide de transmission de mouvement, une deuxième chape reliant la deuxième noix d'articulation à la deuxième bielle, un jeu circonférentiel étant présent entre la deuxième noix d'articulation et le bord externe de l'évidement dans la direction circonférentielle de la tuyère.

Cette constitution de liaison articulée permet de compenser les dilatations tangentielles du carter d'éjection sans contraindre la transmission des efforts de déplacement transmis par chaque vérin aux volets. On diminue ainsi l'hyperstatisme du dispositif de commande des volets.

La présente invention a également pour objet un moteur aéronautique comprenant un arrière-corps équipé d'une tuyère à section variable selon l'invention.

L'invention a encore pour objet un aéronef comprenant au moins un moteur selon l'invention.

### Brève description des dessins.

L'invention sera mieux comprise à la lecture faite ci-après, à titre indicatif mais non limitatif, en référence aux dessins annexés sur lesquels :
- les figures 1 et 2 sont des vues partielles en perspective montrant une tuyère à section variable conformément à un mode de réalisation de l'invention ;
- la figure 3 est une vue éclatée en perspective de la tuyère à section variable des figures 1 et 2 ;

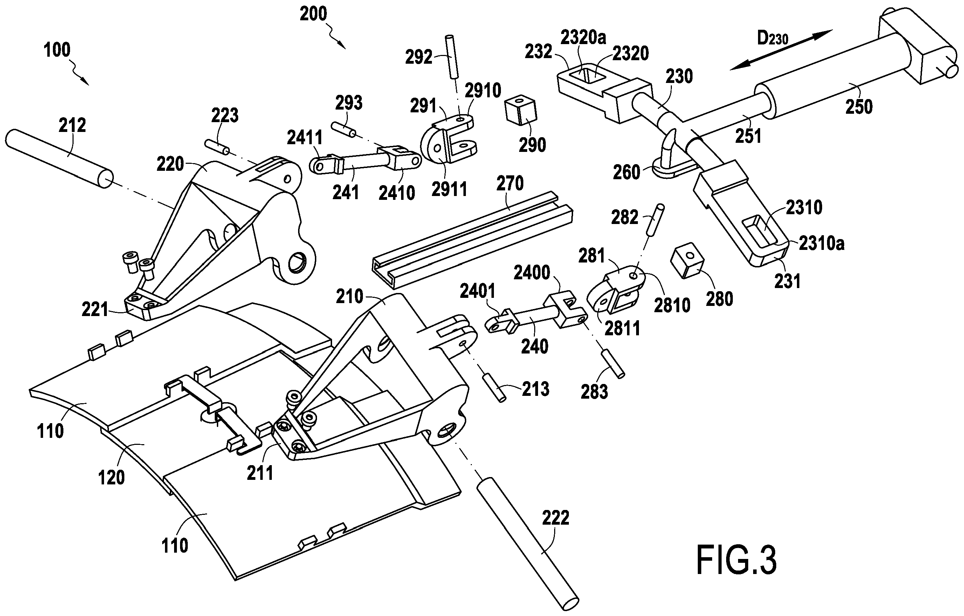

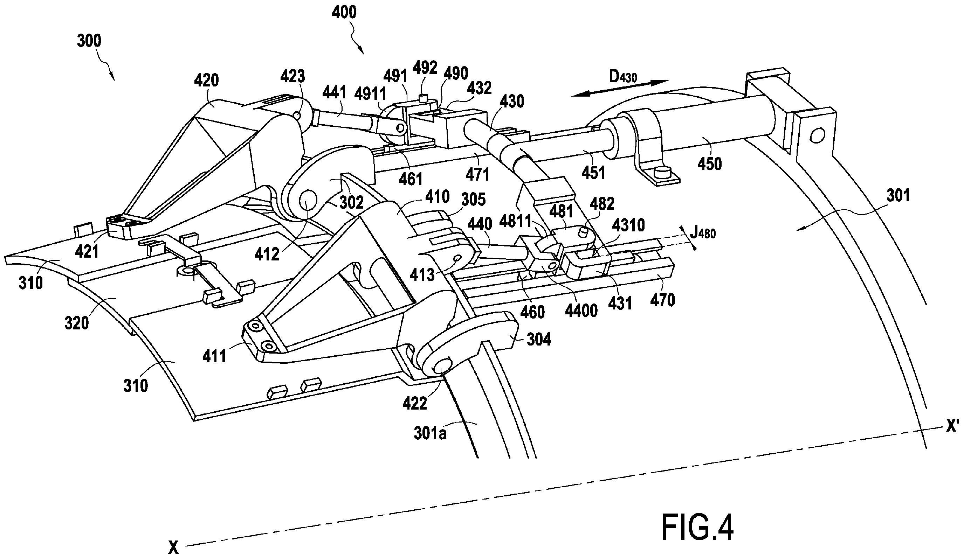

- les figures 3 et 4 sont des vues partielles en perspective montrant une tuyère à section variable conformément à un autre mode de réalisation de l'invention ;

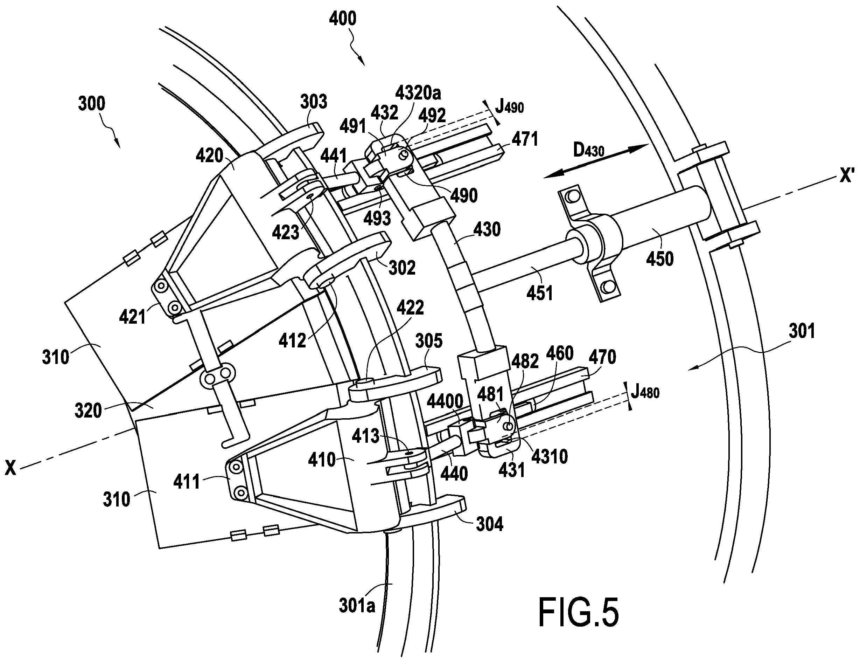

- la figure 5 est une vue éclatée en perspective de la tuyère à section variable des figures 3 et 4 ;

### Description détaillée de modes de réalisation

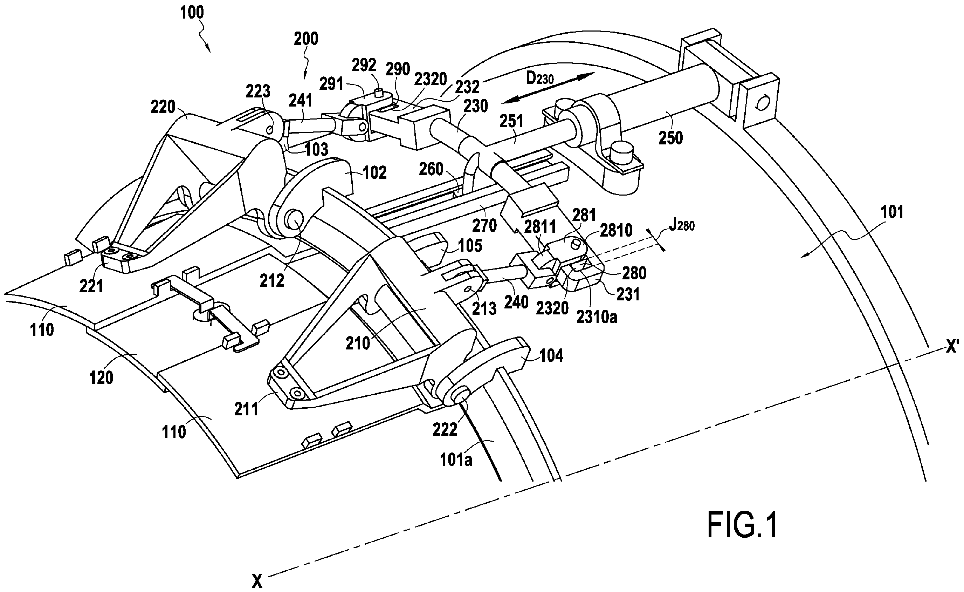

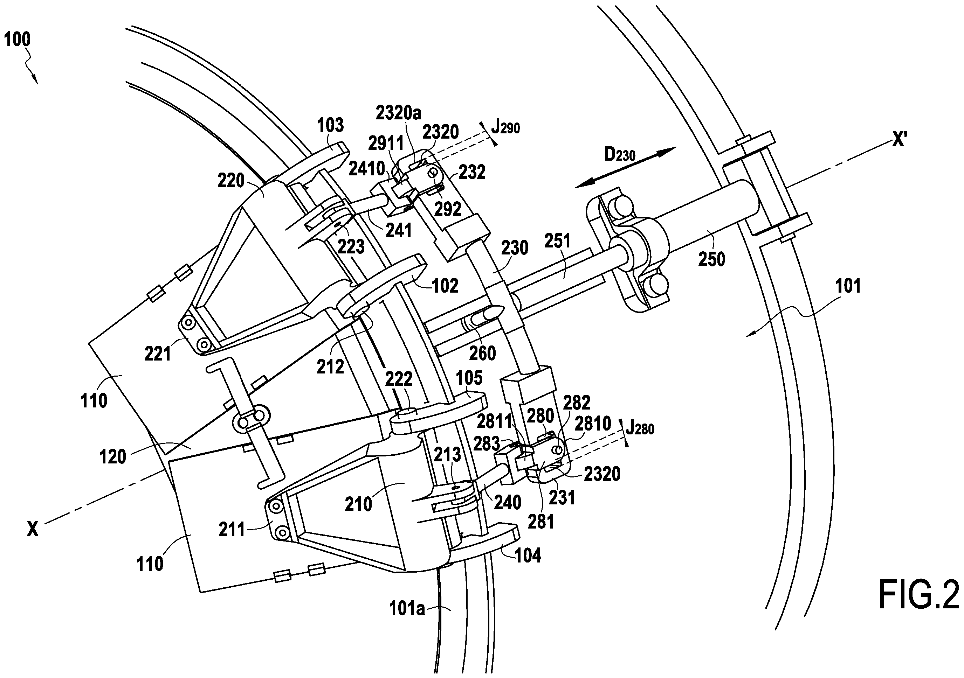

Les figures 1 à 3 montrent une tuyère à section variable 100 selon un mode de réalisation de l'invention. La tuyère 100 comprend une série de volets mobiles internes ou volets chauds 110, un dispositif de commande 200 relié à deux volets internes adjacents 110, le dispositif de commande 200 étant fixé sur le carter d'éjection 101 de la tuyère 100. Une plaque d'étanchéité 120 est fixée entre les volets internes. Les figures 1 et 2 étant des vues partielles de la tuyère 100, seuls deux volets internes adjacents 110 et un dispositif de commande 200 sont représentés sur ces figures. La tuyère est bien entendu composée d'une couronne de volets internes 110 et d'une pluralité de dispositifs de commande 200 répartis de manière annulaire sur la paroi externe du carter d'éjection 101.

Chaque volet interne 110 est relié au carter d'éjection 101 par un levier mobile 210 ou 220 du dispositif de commande 200, chaque levier étant monté de manière pivotante à l'extrémité aval 101a du carter d'éjection 101. Chaque volet interne 110 est mobile entre une première position dans laquelle les volets sont en position haute (figure 1) et une deuxième position dans laquelle les volets sont en position braquée (figure 2). Plus précisément, chaque dispositif de commande 200 comprend deux leviers mobiles 210 et 220 dont les extrémités libres 211 et 221 sont fixées respectivement à deux volets internes adjacents 110. Le levier 210 est mobile autour d'un axe 212 qui est fixé au carter d'éjection via des bras 102 et 103. De même, le levier 220 est mobile autour d'un axe 222 qui est fixé au carter d'éjection via des bras 104 et 105. D'autres systèmes permettant le pivotement des leviers 210 et 220 peuvent être envisagés.

Le dispositif de commande 200 comprend en outre une pièce rigide de transmission de mouvement 230 reliée aux deux leviers mobiles adjacents 210 et 220 respectivement par une première bielle 240 et une deuxième bielle 241. La pièce rigide de transmission de mouvement 230 est en outre reliée dans sa partie centrale à une tige 251 d'un vérin de commande 250 fixé sur le carter d'éjection en amont des leviers 210 et 220. Chaque pièce rigide de transmission de mouvement 230 est apte à se déplacer suivant une double direction D230 correspondant à la direction axiale de la tuyère sous l'action du vérin de commande 250 auquel il est relié de manière à déplacer les leviers adjacents 210 et 220 entre les première et deuxième positions des volets internes 110 (figures 1 et 2).

Dans l'exemple décrit ici, chaque pièce rigide de transmission de mouvement 230 est reliée à un chariot de guidage 260 monté coulissant dans une glissière 270 fixée sur le carter d'éjection 101 en amont des leviers 210 et 220 suivant la direction D230 correspondant à la direction axiale de la tuyère. La glissière 270 est alignée axialement avec le vérin de commande 250.

Comme illustrée notamment sur la figure 3, la pièce rigide de transmission de mouvement 230 comprend une première et une deuxième extrémités 231 et 232 comportant chacune un évidement 2310, respectivement 2320. Une première noix d'articulation 280 est logée dans l'évidement 2310 de la première extrémité 231, la noix 280 étant reliée à une première chape de liaison 281. La chape de liaison 281 est montée à une première extrémité 2810 de manière pivotante sur la noix 280 via un axe 282 qui s'étend dans une direction radiale par rapport à l'axe XX' de la tuyère 100. La première chape de liaison 281 est en outre reliée à sa deuxième extrémité 2811 à une première extrémité 2400 de la première bielle 240 de manière pivotante via un axe 283 qui s'étend dans la direction circonférentielle de la tuyère. La première noix d'articulation 280 et la première chape de liaison 281 forment ainsi une première liaison articulée entre la première extrémité 231 de la pièce rigide de transmission de mouvement 230 et la première bielle 240. De même, une deuxième noix d'articulation 290 est logée dans l'évidement 2320 de la deuxième extrémité 232, la noix 290 étant reliée à une deuxième chape de liaison 291. La chape de liaison 291 est montée à une première extrémité 2910 de manière pivotante sur la noix 290 via un axe 292 qui s'étend dans une direction radiale par rapport à l'axe XX' de la tuyère 100. La deuxième chape de liaison 291 est en outre reliée à sa deuxième extrémité 2911 à la première extrémité 2410 de la deuxième bielle 241 de manière pivotante via un axe 293 qui s'étend dans la direction circonférentielle de la tuyère. La deuxième noix d'articulation 290 et la deuxième chape de liaison 291 forment ainsi une deuxième liaison articulée entre la deuxième extrémité 232 de la pièce rigide de transmission de mouvement 230 et la deuxième bielle 241.

Des jeux circonférentielles J280 (figure 1) et J290 (figure 2) sont respectivement présents entre la première noix d'articulation 280, respectivement la deuxième noix d'articulation 290, et le bord externe 2310a de l'évidement 2310 dans la direction circonférentielle de la tuyère 100, respectivement le bord externe 2320a de l'évidement 2320 dans la direction circonférentielle de la tuyère 100.

La deuxième extrémité 2401 de la première bielle 240 est reliée de façon pivotante au premier levier mobile 210 par un axe 213 qui s'étend dans la direction circonférentielle de la tuyère 100 tandis que la deuxième extrémité 2411 de la deuxième bielle 241 est reliée de façon pivotante au deuxième levier mobile 220 par un axe 223 qui s'étend dans la direction circonférentielle de la tuyère 100.

Ainsi, un mouvement de la tige 251 du vérin de commande 250 en direction de l'extrémité 110a du carter d'éjection 110 (double direction D230) permet de faire pivoter leviers mobiles 210 et 220 autour de leur axe de rotation respectivement 212 et 222 vers l'intérieur du carter d'éjection. Les extrémités libres 211 et 221 des leviers 210 et 220 étant fixées respectivement aux deux volets internes adjacents 110, les volets internes 110 sont alors abaissés vers la deuxième position dans laquelle les volets sont en position braquée (figure 2).

De même, un mouvement de la tige 251 du vérin de commande 250 dans la direction opposée à l'extrémité 110a du carter d'éjection 110 (double direction D230) permet de faire pivoter les leviers mobiles 210 et 220 autour de leur axe de rotation respectivement 212 et 222 vers l'extérieur du carter d'éjection. Les extrémités libres 211 et 221 des volets 210 et 220 étant fixées respectivement aux deux volets internes adjacents 110, les volets internes 110 sont alors relevés vers la première position dans laquelle les volets sont en position haute (figure 1).

Les figures 4 à 6 montrent une tuyère à section variable 300 selon un autre mode de réalisation de l'invention et qui diffère de la tuyère 100 décrite précédemment en ce que chaque dispositif de commande comprend deux chariots de guidage chacun montés coulissant dans une glissière.

Plus précisément, la tuyère 300 comprend une série de volets mobiles internes ou volets chauds 310, un dispositif de commande 400 relié à deux volets internes adjacents 310, le dispositif de commande 400 étant fixé sur le carter d'éjection 301 de la tuyère 300. Une plaque d'étanchéité 320 est fixée entre les volets internes. Les figures 4 et 5 étant des vues partielles de la tuyère 300, seuls deux volets internes adjacents 310 et un dispositif de commande 400 sont représentés sur ces figures. La tuyère est bien entendu composée d'une couronne de volets internes 310 et d'une pluralité de dispositifs de commande 400 répartis de manière annulaire sur la paroi externe du carter d'éjection 301.

Chaque volet interne 310 est relié au carter d'éjection 301 par un levier mobile 410 ou 420 du dispositif de commande 400, chaque levier étant monté de manière pivotante à l'extrémité aval 301a du carter d'éjection 301. Chaque volet interne 310 est mobile entre une première position dans laquelle les volets sont en position haute (figure 4) et une deuxième position dans laquelle les volets sont en position braquée (figure 5). Plus précisément, chaque dispositif de commande 400 comprend deux leviers mobiles 410 et 420 dont les extrémités libres 411 et 421 sont fixées respectivement à deux volets internes adjacents 310. Le levier 410 est mobile autour d'un axe 412 qui est fixé au carter d'éjection via des bras 302 et 303. De même, le levier 420 est mobile autour d'un axe 422 qui est fixé au carter d'éjection via des bras 304 et 305. D'autres systèmes permettant le pivotement des leviers 310 et 320 peuvent être envisagés.

Le dispositif de commande 400 comprend en outre une pièce rigide de transmission de mouvement 430 reliée aux deux leviers mobiles adjacents 410 et 420 respectivement par une première bielle 440 et une deuxième bielle 441. La pièce rigide de transmission de mouvement 430 est en outre reliée dans sa partie centrale à une tige 451 d'un vérin de commande 450 fixé sur le carter d'éjection en amont des leviers 410 et 420. Chaque pièce rigide de transmission de mouvement 430 est apte à se déplacer suivant une double direction D430 correspondant à la direction axiale de la tuyère sous l'action du vérin de commande 450 auquel il est relié de manière à déplacer les leviers adjacents 410 et 420 entre les première et deuxième positions des volets internes 310 (figures 4 et 5).

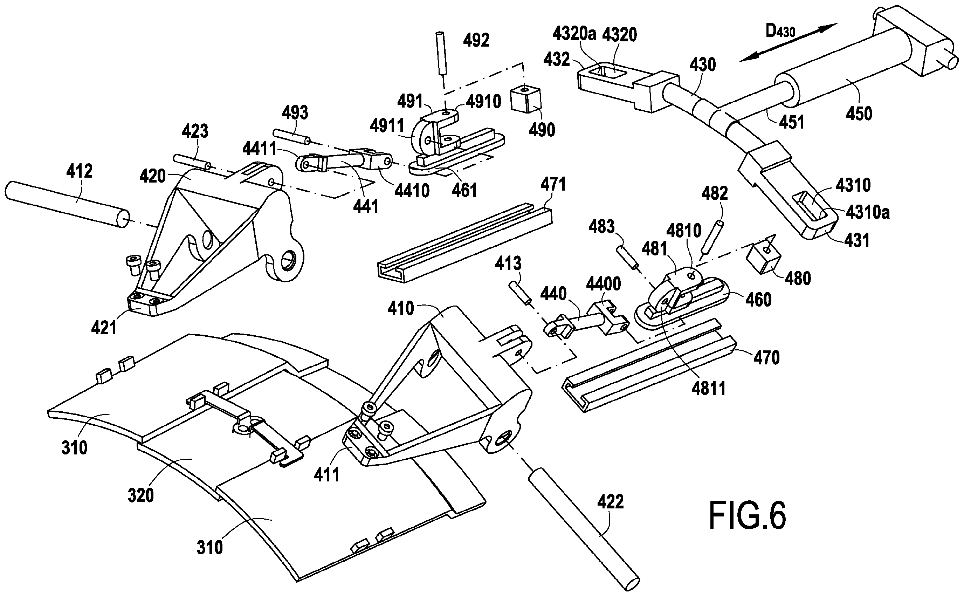

Comme illustrée notamment sur la figure 6, la pièce rigide de transmission de mouvement 430 comprend une première et une deuxième extrémités 431 et 432 comportant chacune un évidement 4310, respectivement 4320. Une première noix d'articulation 480 est logée dans l'évidement 4310 de la première extrémité 431, la noix 480 étant reliée à une première chape de liaison 481. La chape de liaison 481 est montée à une première extrémité 4810 de manière pivotante sur la noix 480 via un axe 482 qui s'étend dans une direction radiale par rapport à l'axe XX' de la tuyère 300. La première chape de liaison 481 est en outre reliée à sa deuxième extrémité 4811 à une première extrémité 4400 de la première bielle 440 de manière pivotante via un axe 483 qui s'étend dans la direction circonférentielle de la tuyère. La première noix d'articulation 480 et la première chape de liaison 481 forment ainsi une première liaison articulée entre la première extrémité 431 de la pièce rigide de transmission de mouvement 430 et la première bielle 440.

Dans l'exemple décrit ici, la première chape de liaison 481 comprend un chariot de guidage 460 monté coulissant dans une première glissière 470 fixée sur le carter d'éjection 301 en amont du premier levier 410 suivant la direction D430 correspondant à la direction axiale de la tuyère. La première glissière 470 est alignée axialement avec la première bielle 440.

De même, une deuxième noix d'articulation 490 est logée dans l'évidement 4320 de la deuxième extrémité 432, la noix 490 étant reliée à une deuxième chape de liaison 491. La chape de liaison 491 est montée à une première extrémité 4910 de manière pivotante sur la noix 490 via un axe 492 qui s'étend dans une direction radiale par rapport à l'axe XX' de la tuyère 300. La deuxième chape de liaison 491 est en outre reliée à sa deuxième extrémité 4911 à la première extrémité 4410 de la deuxième bielle 441 de manière pivotante via un axe 493 qui s'étend dans la direction circonférentielle de la tuyère. La deuxième noix d'articulation 490 et la deuxième chape de liaison 491 forment ainsi une deuxième liaison articulée entre la deuxième extrémité 432 de la pièce rigide de transmission de mouvement 430 et la deuxième bielle 441.

Dans l'exemple décrit ici, la deuxième chape de liaison 491 comprend un chariot de guidage 461 monté coulissant dans une deuxième glissière 471 fixée sur le carter d'éjection 301 en amont du deuxième levier 410 suivant la direction D430 correspondant à la direction axiale de la tuyère. La deuxième glissière 471 est alignée axialement avec la deuxième bielle 440.

Des jeux circonférentielles J480 et J490 sont respectivement présents entre la première noix d'articulation 480, respectivement la deuxième noix d'articulation 490, et le bord externe 4310a de l'évidement 4310 dans la direction circonférentielle de la tuyère 300, respectivement le bord externe 4320a de l'évidement 4320 dans la direction circonférentielle de la tuyère 300.

La deuxième extrémité 4401 de la première bielle 440 est reliée de façon pivotante au premier levier mobile 410 par un axe 413 qui s'étend dans la direction circonférentielle de la tuyère 300 tandis que la deuxième extrémité 4411 de la deuxième bielle 441 est reliée de façon pivotante au deuxième levier mobile 420 par un axe 423 qui s'étend dans la direction circonférentielle de la tuyère 300.

Ainsi, un mouvement de la tige 451 du vérin de commande 450 en direction de l'extrémité 310a du carter d'éjection 310 (double direction D430) permet de faire pivoter leviers mobiles 410 et 420 autour de leur axe de rotation respectivement 412 et 422 vers l'intérieur du carter d'éjection. Les extrémités libres 411 et 421 des leviers 410 et 420 étant fixées respectivement aux deux volets internes adjacents 310, les volets internes 310 sont alors abaissés vers la deuxième position dans laquelle les volets sont en position braquée (figure 5).

De même, un mouvement de la tige 451 du vérin de commande 450 dans la direction opposée à l'extrémité 310a du carter d'éjection 310 (double direction D430) permet de faire pivoter leviers mobiles 410 et 420 autour de leur axe de rotation respectivement 412 et 422 vers l'extérieur du carter d'éjection. Les extrémités libres 411 et 421 des volets 410 et 420 étant fixées respectivement aux deux volets internes adjacents 310, les volets internes 410 sont alors relevés vers la première position dans laquelle les volets sont en position haute (figure 4).

## Revendications

1. Tuyère à section variable (100) comprenant un carter d'éjection (101) et une pluralité de volets internes (110) disposés en couronne en aval du carter d'éjection, chaque volet interne étant relié au carter d'éjection par un levier mobile (210 ; 220) monté de manière pivotante à l'extrémité aval (101a) du carter d'éjection (101), chaque levier étant mobile entre une première position dans laquelle les volets internes (110) sont en position haute et une deuxième position dans laquelle les volets internes sont en position braquée, la tuyère comprenant en outre une pluralité de pièces rigides de transmission de mouvement (230) réparties de manière circonférentielle autour du carter d'éjection (101), chaque pièce rigide de transmission de mouvement (230) étant reliée respectivement à deux leviers adjacents (210, 220) par une première et une deuxième bielles (240, 241), chaque pièce rigide de transmission de mouvement étant en outre reliée à un vérin de commande (250), chaque pièce rigide de transmission de mouvement (230) étant apte à se déplacer dans une direction (D230) correspondant à la direction axiale (XX') de la tuyère (100) sous l'action du vérin de commande (250) auquel il est relié de manière à déplacer les leviers adjacents entre les première et deuxième positions,
**caractérisée en ce que** chaque pièce rigide de transmission de mouvement (230) est reliée à un chariot de guidage (260) monté coulissant dans une glissière (270), chaque glissière étant fixée sur le carter d'éjection (101) en amont des leviers (210, 220) suivant une direction correspondant à la direction axiale (XX') de la tuyère (100), chaque glissière (270) étant alignée axialement avec un vérin de commande (250), ou **en ce que** chaque pièce rigide de transmission de mouvement (430) est reliée à deux chariots de guidage (460, 461) chacun montés coulissant dans une glissière (470 ; 471), chaque glissière étant fixée sur le carter d'éjection (101) en amont de chaque levier (410 ; 420) suivant une direction correspondant à la direction axiale (XX') de la tuyère, les glissières étant décalées dans le sens circonférentiel par rapport à chaque vérin de commande (250).

2. Tuyère selon la revendication 1, dans laquelle chaque pièce rigide de transmission de mouvement (230) est reliée aux première et deuxième bielles (240, 241) respectivement par une première et deuxième liaisons articulées.

3. Tuyère selon la revendication 2, dans laquelle la première liaison articulée comprend une première noix d'articulation (280) logée dans un évidement (2310) présent à une première extrémité (231) de la pièce rigide de transmission de mouvement (230), une première chape (281) reliant la première noix d'articulation (280) à la première bielle (240), un jeu circonférentiel (J₂₈₀) étant présent entre la première noix d'articulation (280) et le bord externe (2310a) de l'évidement (2310) dans la direction circonférentielle de la tuyère (100), et dans laquelle la deuxième liaison articulée comprend une deuxième noix d'articulation (290) logée dans un évidement (2320) présent à une deuxième extrémité (232) de la pièce rigide de transmission de mouvement (230), une deuxième chape (291) reliant la deuxième noix d'articulation (290) à la deuxième bielle (241), un jeu circonférentiel (J₂₉₀) étant présent entre la deuxième noix d'articulation (290) et le bord externe (2320a) de l'évidement (2320) dans la direction circonférentielle de la tuyère.

4. Moteur aéronautique comprenant un arrière-corps équipé d'une tuyère à section variable (100) selon l'une quelconque des revendications 1 à 3.

5. Aéronef comprenant au moins un moteur selon la revendication 4.

## Patentansprüche

1. Düse (100) mit variablem Querschnitt, umfassend ein Ausstoßgehäuse (101) und eine Vielzahl von inneren Klappen (110), die kranzförmig stromabwärts von dem Ausstoßgehäuse angeordnet sind, wobei jede innere Klappe mit dem Ausstoßgehäuse durch einen bewegbaren Hebel (210; 220) verbunden ist, der schwenkbar an dem stromabwärtigen Ende (101a) des Ausstoßgehäuses (101) montiert ist, wobei jeder Hebel zwischen einer ersten Position, in der sich die inneren Klappen (110) in einer hohen Position befinden, und einer zweiten Position, in der sich die inneren Klappen in einer eingelenkten Position befinden, bewegbar ist, wobei die Düse außerdem eine Vielzahl von steifen Bewegungsübertragungsteilen (230) umfasst, die in Umfangsrichtung um das Ausstoßgehäuse (101) verteilt sind, wobei jeder steife Bewegungsübertragungsteil (230) jeweils mit zwei benachbarten Hebeln (210, 220) durch eine erste und eine zweite Schubstange (240, 241) verbunden ist, wobei jeder steife Bewegungsübertragungsteil außerdem mit einem Steuerzylinder (250) verbunden ist, wobei jeder steife Bewegungsübertragungsteil (230) dafür geeignet ist, um sich in einer Richtung (D₂₃₀), die der axialen Richtung (XX') der Düse (100) entspricht, unter der Einwirkung des Steuerzylinders (250) zu verschieben, mit dem er verbunden ist, um die benachbarten Hebel zwischen der ersten und zweiten Position zu verschieben,
**dadurch gekennzeichnet, dass** jeder steife Bewegungsübertragungsteil (230) mit einem Führungsschlitten (260) verbunden ist, der gleitend in einer Gleitschiene (270) montiert ist, wobei jede Gleitschiene an dem Ausstoßgehäuse (101) stromaufwärts von den Hebeln (210, 220) in einer Richtung befestigt ist, die der axialen Richtung (XX') der Düse (100) entspricht, wobei jede Gleitschiene (270) axial mit einem Steuerzylinder (250) ausgerichtet ist, oder dadurch, dass jeder steife Bewegungsübertragungsteil (430) mit zwei Führungsschlitten (460, 461) verbunden ist, die jeweils in einer Gleitschiene (470; 471) gleitend montiert sind, wobei jede Gleitschiene an dem Ausstoßgehäuse (101) stromaufwärts von jedem Hebel (410; 420) in einer Richtung montiert ist, die der axialen Richtung (XX') der Düse (100) entspricht, wobei die Gleitschienen in der Umfangsrichtung in Bezug auf jeden Steuerzylinder (250) versetzt sind.

2. Düse nach Anspruch 1, wobei jeder steife Bewegungsübertragungsteil (230) mit der ersten und zweiten Schubstange (240, 241) jeweils durch eine erste und zweite Gelenkverbindung verbunden ist.

3. Düse nach Anspruch 2, wobei die erste Gelenkverbindung eine erste Gelenkmutter (280) umfasst, welche in einer Ausnehmung (2310) aufgenommen ist, die an einem ersten Ende (231) des steifen Bewegungsübertragungsteils (230) vorhanden ist, wobei ein erstes Gabelstück (281) die erste Gelenkmutter (280) mit der ersten Schubstange (240) verbindet, wobei ein Umfangsspiel (J₂₈₀) zwischen der ersten Gelenkmutter (280) und dem äußeren Rand (2310a) der Ausnehmung (2310) in der Umfangsrichtung der Düse (100) besteht, und wobei die zweite Gelenkverbindung eine zweite Gelenkmutter (290) umfasst, welche in einer Ausnehmung (2320) aufgenommen ist, die an einem zweiten Ende (232) des steifen Bewegungsübertragungsteils (230) vorhanden ist, wobei ein zweites Gabelstück (291) die zweite Gelenkmutter (290) mit der zweiten Schubstange (241) verbindet, wobei ein Umfangsspiel (J₂₉₀) zwischen der zweiten Gelenkmutter (290) und dem äußeren Rand (2320a) der Ausnehmung (2320) in der Umfangsrichtung der Düse besteht.

4. Luftfahrzeugstriebwerk, umfassend einen Heckkörper, der mit einer Düse (100) mit variablem Querschnitt nach einem der Ansprüche 1 bis 3 ausgestattet ist.

5. Luftfahrzeug, umfassend mindestens ein Triebwerk nach Anspruch 4.

## Claims

1. A variable section nozzle (100) comprising an ejection casing (101) and a plurality of internal flaps (110) arranged in a ring downstream from the ejection casing, each internal flap being connected to the ejection casing by a movable lever (210; 220) pivotally mounted to the downstream end (101a) of the ejection casing (101), each lever being movable between a first position in which the internal flaps (110) are in a high position and a second position in which the internal flaps are in a folded-down position, the nozzle further comprising a plurality of rigid movement transmission parts (230) distributed circumferentially around the ejection casing (101), each rigid movement transmission part (230) being connected respectively to two adjacent levers (210, 220) by first and second connecting rods (240, 241), each rigid movement transmission part also being connected to a control actuator (250), each rigid movement transmission part (230) being suitable for moving in a direction (D230) corresponding to the axial direction (XX') of the nozzle (100) under the action of the control actuator (250) to which it is connected in such a manner as to move the adjacent levers between the first and second positions; the nozzle being **characterized in that** each rigid movement transmission part (230) is connected to a guide carriage (260) slidably mounted in a respective slideway (270), each slideway being fastened on the ejection casing (101) upstream from the levers (210, 220) in a direction corresponding to the axial direction (XX') of the nozzle (100), each slideway (270) being in axial alignment with a control actuator (250), or **in that** each rigid movement transmission part (430) is connected to two guide carriages (460, 461) each slidably mounted in a respective slideway (470; 471), each slideway being fastened on the ejection casing (101) upstream from each lever (410; 420) in a direction corresponding to the axial direction (XX') of the nozzle, the slideways being offset in the circumferential direction relative to each control actuator (250).

2. A nozzle according to claim 1, wherein each rigid movement transmission part (230) is connected to the first and second connecting rods (240, 241) by respective first and second hinged connections.

3. A nozzle according to claim 2, wherein the first hinged connection comprises a first hinge block (280) received in a recess (2310) present at a first end (231) of the rigid movement transmission part (230), a first clevis (281) connecting the first hinge block (280) to the first connecting rod (240), circumferential clearance (J280) being present between the first hinge block (280) and the edge (2310a) of the recess (2310) that is on the outside in the circumferential direction of the nozzle (100), and wherein the second hinged connection comprises a second hinge block (290) received in a recess (2320) present at a second end (232) of the rigid movement transmission part (230), a second clevis (291) connecting the second hinge block (290) to the second connecting rod (241), circumferential clearance (J290) being present between the second hinge block (290) and the edge (2320a) of the recess (2320) that is on the outside in the circumferential direction of the nozzle.

4. An aeroengine including an afterbody fitted with a variable section nozzle (100) according to any one of claims 1 to 3.

5. An aircraft including at least one engine according to claim 4.
